# EUROPEAN PATENT APPLICATION

(11) **EP 4 672 112 A1**
(43) Date of publication of application: **31.12.2025**
(21) Application number: 24184027.1
(22) Date of filing: 24.06.2024
(51) Int. Cl.: G06Q 10/20, G06Q 10/06, H04L 12/28, G05B 23/02

(54) **QUALITY MANAGEMENT FOR HOUSEHOLD APPLIANCES**

(71) Applicant: BSH Hausgeräte GmbH, 81739 München (DE)
(72) Inventor: Aguado Munoz, Sergio, 85521 Ottobrunn (DE); Imialek, Marek, 81825 München (DE)

(57) **Abstract**

A method (200) for quality management for household appliances (110) comprises steps of collecting first data indicative of operation or usage of a plurality of household appliances (110) of a predetermined type; collecting second data indicative of malfunctions or service requirements of household appliances (110) of said type; wherein first or second data of a household appliance (110) is subjected to a filter that is configurable by a user associated to said household appliance (110); and applying machine learning to relate first data to second data.

## Description

The present invention concerns quality management of a household appliance. More specifically, the present invention concerns quality management for a fleet of household appliances.

A household appliance is adapted to be used in a household and may be electrically powered. The appliance is designed with a predetermined durability so that a user may enjoy its services. However, the appliance may malfunction or break and it may be necessary to replace a part or perform a service to make it function properly again. For the user this may result in a period in which he or she cannot use the appliance. A service technician must be called and a service must be scheduled, or the appliance must be turned in to a repair shop. Besides, the service or repair generally costs money, which the user must invest to keep the appliance usable.

Proper product care or regular maintenance may significantly prolong product lifetime, reliability or quality of service. In some cases, it may be possible for the user to perform some actions that will make the appliance usable again. However, to a regular user it is not always clear what actions must be performed at what time in order to prevent a malfunction of the appliance.

EP 3 599 437 B1 proposes a refrigerator and a cloud server detecting an abnormal state. Upon a malfunction of the refrigerator a remote service is contacted for guidance.

US 2022 364 957 A1 proposes a system and method for cloud-based fault code diagnostics. This solution collects vast amounts of data, which is used for various purposes and distributed to different parties of interest.

It is an object of the present invention to provide an improved technique for maintaining a fleet of household appliances. The invention solves this object with the subject-matter of the enclosed independent claims. The dependent claims describe preferred embodiments.

According to a first aspect of the present invention, a method for quality management for household appliances comprises steps of collecting first data indicative of operation or usage of a plurality of household appliances of a predetermined type; of collecting second data indicative of malfunctions or service requirements of household appliances of said type; wherein first or second data of a household appliance is subjected to a filter that is configurable by a user associated to said household appliance; and of applying machine learning to relate first data to second data.

In the present method, there is a consent given by the user to collect and analyze said data. Collected data may be used to train a machine, which implements machine learning. The machine may especially use an artificial intelligence (AI) technique and get trained on the basis of said data. The machine may for instance use or comprise an artificial neural network (ANN), which may comprise an input layer, an output layer and at least one hidden layer. Deep learning may be implemented on said machine. The machine may thus be able to identify and use patterns or relationships in said data. The trained machine may accept first data and produce (or generate) second data, wherein said first data may be different from any training data and produced (or generated) second data may still be related to said first data.

The household appliance may for instance comprise a kitchen appliance or a laundry treating appliance. As a kitchen appliance, said appliance may for instance comprise a blender, a dishwasher, a slicing machine, a cooking hood or a food processor. A laundry treating appliance may for example be a washing machine, a tumble dryer, a hot press, a flat iron, a steam iron or the like.

It is furthermore preferred that information indicative of a user associated to a household appliance is extracted from first and second data. Said data may thus be anonymized and still permit statistical or AI processing. The data may be brought into a form where the user may not be deduced from said first or second data. A user may be informed on the way the collected data is processed and proof may be offered that inferring a person from collected data is practically impossible. One or more of various known anonymization techniques like hash tables or mathematical one way functions may be used to make sure personal data is never determined and never can be reconstructed from the collected data.

The above-described machine may be trained on the basis of anonymized household appliance fleet data to make predictions. In a preferred embodiment, said method may comprise a step of predicting an upcoming malfunction or service requirement in a household appliance on the basis of its operation or usage data. Such a prediction or forecast may be determined before trouble with the appliance arises and especially before a malfunction is detectable by a user. It is preferred that said first data is routinely forwarded for collection purposes. For each set of data - or less frequently, if desired - a probability for an upcoming malfunction may be determined. Practically, a user may trade appliance usage data for improved forecast data concerning possible upcoming difficulties in using said appliance.

Said forecast may be made available to the user in regular intervals, if said forecast proves unfavorable or per user request. In one preferred embodiment, predictions are done on a regular basis and the user may be assured of the good working order of his or her household appliance. Should a possible upcoming problem be identified on the basis of said first data, a corresponding warning message may be provided to the user. Such message may be provided proactively, such as to inform the user only if need arises.

In this way, the user may be enabled to make a better decision on how to proceed with said appliance. If the appliance has served much of an expected lifetime, the user may decide to proceed to a more modern unit as soon as the present one fails. However, the user may also decide to stick with the existing machine and try and continue to enjoy its services for some more time.

In one embodiment, remaining usage information until a predicted malfunction is determined. This information may be communicated to the user, preferably after said remaining usage has dropped under a predetermined threshold, which may be user-configurable. The remaining usage may be expressed in use time, e.g. operation hours or overall time, including standby or off times. E.g. an exhaust hood may be forecast to be operable for some 60 more days, based on average daily usage, or 10 more net hours of operation. Usage may also be expressed in units of cycles or uses. For instance, a coffee machine may be estimated to be able to produce some 100 more cups of coffee before a heating element has lost too much of its heating power. A user may thus be able to make up his or her mind on how to proceed with said household appliance and take appropriate action.

Furthermore, a user intervention for preventing or delaying a predicted malfunction may be determined. Such action may lie in the range of skill of a typical user and may comprise actions like cleaning, descaling, replacing a user-accessible part or checking functionality of an element. Such actions may also help prolonging machine life of said appliance. It has been observed that regular service action is frequently not performed unless a user is specifically invited to do so. With the present invention, service procedures may be reduced to cases of actual necessity.

A service measure for preventing or delaying the predicted malfunction may be determined by means of said trained machine. Such a service measure will generally be carried out not by the user but by a trained technician. The user may estimate the cost for said service measure, possibly including a price for a replacement part, auxiliary parts like seals or compensation for the technician. For instance, a part that is likely to break in the near or mid future may be replaced before malfunction is likely to occur. The user may be warned of said possible malfunction so that he or she may choose to book a technician to perform said service measure. Such action may be called preemptive maintenance. The appliance may have a lower overall downtime and a time where it is not available due to a service being carried out may be managed more conveniently.

The method may further comprise collecting third data indicative of service or repair applied to household appliances of that type; wherein prediction capabilities of the machine learning are verified or refined on the basis of said third data. A user intervention or a technician's service intervention may be noted and used to verify and/or improve prediction capabilities. A replaced part may be analyzed for actual damage. Actual appliance lifetime may be monitored and an effect of a service action on said lifetime may be monitored. Such checks may be used to further train said machine to further improve its relating or predicting capabilities.

According to yet another embodiment of the present invention, fourth data indicative of retired household appliances of said type is collected; and wherein an expected lifetime of said type of household appliance is determined. The fourth data, too, may be used to improve or check prediction capabilities of said trained machine. The remaining lifetime of household appliances of the same type may thus be determined better.

According to another embodiment of the present invention, a device comprises a first interface for first data indicative of operation or usage of household appliances of a predetermined type; a second interface for second data indicative of malfunctions or service requirements of household applications of that type; and a processing unit that is adapted to apply machine learning to relate first data to second data. Such a device may be realized as a computer or other processing machine. The device may comprise a computer or a server or it may be realized as a service, for instance in a cloud environment. It is to be noted that anonymization of household appliance data as described herein may be done either on the user side or on the server side. The device may transform received first and second data into a form where inference of personal data is not possible, or this may be done by a different processing unit. In one embodiment, said anonymization may be done by the appliance or a controlling device. In another embodiment, anonymization may be done by storing facilities, which are adapted to accumulate and/or preserve collected first and/or second data. First and second data may be maintained by dedicated units or a combined unit.

According to yet another embodiment of the present invention, a control device for a household appliance comprises a sensor for determining operation or usage data of the household appliance; a communication interface; a user interface; a processing unit that is adapted to capture user input relating to a data filter; to collect first data indicative of operation or usage of said household appliance; to collect second data indicative of malfunctions or service requirements of said household appliance; to subject said data to said filter; and to provide the filtered data to an external unit. As has been mentioned herein, anonymization may be done here or in another device, especially the above-described processing device or a data maintenance or storage device.

The processing unit may be adapted to carry out, completely or in part, a method disclosed herein. The processing unit may be of an electronic nature and may comprise a micro computer or micro controller, an ASIC or a similar device. The method may be realized as a computer program product with program code means and may be stored on a computer readable medium. Features or advantages of the method may be applicable to a corresponding device or system as well as vice versa.

Also proposed is a household appliance, which comprises a control device described herein. The household appliance is preferred to be an electric device and may especially comprise a kitchen appliance, a floor treating appliance, a cleaning device or a laundry treating appliance. Other household appliances like an electric tool are also possible.

A system comprises the above-described device and a plurality of above-described household appliances. It is especially preferred that the system comprises a fleet of such household appliances. For instance, a producer of a certain type of household appliance may strive to use as many of the produced appliances as possible for providing data for a technique as described herein.

Said system may be adapted to work with more than one type of household appliance. Data for one type of household appliance may be collected from the same or similar devices from only one or from different manufacturers. E.g. data may be collected only from appliances of a predetermined type and brand. Data may be collected from the same type of appliance, but in different models or from different manufacturers. Data from different household appliances may also be collected.

A machine learning technique as described herein may exploit the fact that certain machine learning techniques may be good at accepting a large number of input data points and provide a comparatively tiny number of output parameters. This is especially true for ANNs, where there may be hundreds of thousands of input parameters and only one or two output parameters, as is custom e.g. in image recognition.

In the described system, each household appliance may be assigned a unique identification; and the processing unit of a household appliance is adapted to provide said data along with said identification. The appliance's control device may be adapted to provide said data along with said identification. The identification may help relating different data points to the same appliance. However, at the same time anonymization as proposed herein may ensure that there is no way from said data to an identification of a user associated to a household appliance, which provided said data.

Non-restricting embodiments of the invention will now be discussed in more detail with reference to the enclosed drawings in which:
- figure 1: shows a system;
- figure 2: shows a flow diagram of a method.

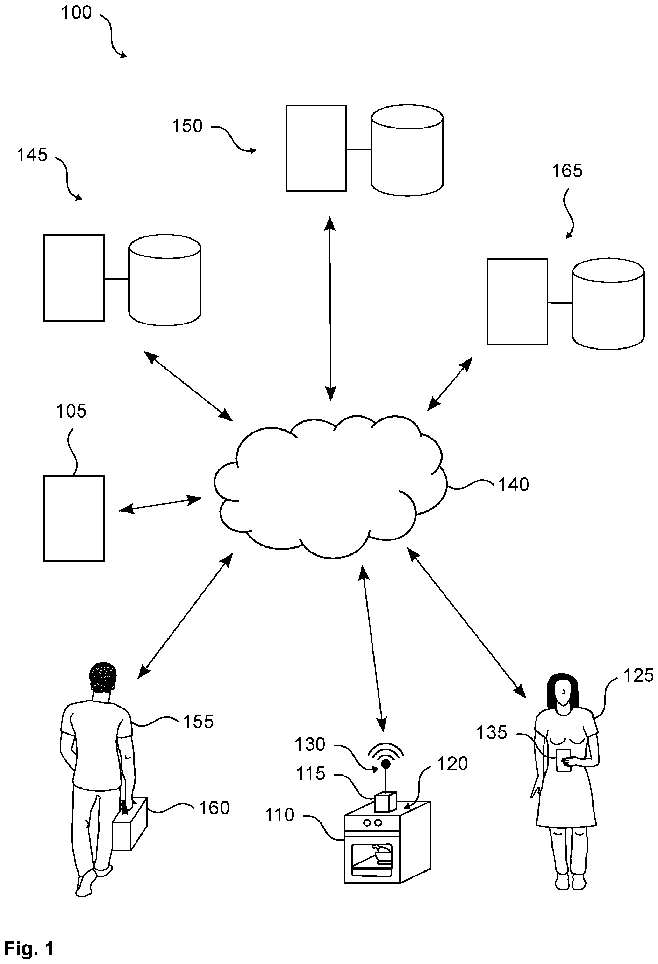

Figure 1 shows an exemplary system 100. The system 100 comprises a device 105 which may be trained on the basis of data that is collected from a plurality of household appliances 110. Such a household appliance 110 is preferred to be equipped with a control device 115 which comprises a processing unit as well as one or more sensors 120 for picking up operation or usage data of an associated household appliance 110. A sensor 120 may be part of the household appliance 110 or shared with it.

Sensors 120 may register different values from different categories, like temperature, voltage, program running, phase of the program, step of the program, time remaining, program running, error code etc. Such sensors 120 could also register more complicated data, as for example vibrations, sounds/noises or force or torque generated.

Exemplary sensors 120 may be adapted to determine on- and off-times or comprise a temperature sensor, an electric voltage or current sensor, a pressure sensor, a light sensor or a similar sensor. The processing unit may also act as a sensor 120 and determine data on what process the appliance 110 was requested to carry out when and/or under which circumstances etc. A process parameter or a control parameter may also be determined, including user settings and a progression of a processing parameter. Should the appliance for instance comprise a coffee maker then collected data may comprise information on which kind of coffee specialty was requested when, how much of it, how strong it was, how much water and coffee beans were used, how long it took, whether or not there were any problems encountered, what brewing temperature was used, how long it took to reach said brewing temperature, what water pressure could be achieved and so forth. More first data may comprise a counter value, e.g. how many coffees have been processed since the last service or how many times a coffee beans grinding mill had been used. It may also comprise a timer value like how long something took or how much time a certain part had been activated in a predetermined way. Generally, said first data may comprise any information on how said appliance 110 was used.

The household appliance 110 may be associated to a user 125, which may also be associated to a household. Other appliances 110 may be associated to that same household. The user 125 is a person that is in any way responsible for said appliance 110 and is especially the human that will be informed of health data determined for said household appliance 110. It is not strictly necessary that the user 125 actually uses or operates said household appliance 110; other persons in said household may do this instead or additionally.

The control device 115 comprises a communication interface 130 for communicating with an external unit and a user interface 135 for communicating with said user 125. In present embodiment both interfaces may share certain elements. The interface 130 may for instance comprise a radio communication link like WLAN or Bluetooth and may communicate wirelessly with a hot spot which may interface wireless data with an optical or electric data network 140. The network 140 may comprise, for instance, a section of a mobile network or the internet.

The user interface 135 may be realized at the appliance 110, for instance in the form of buttons, screens or the like. In present exemplary case the user interface 135 is realized on a mobile device accessible to said user 125, wherein the mobile device may be a smart phone, a tablet computer, a laptop computer or a similar type of device. The mobile device communicates with the control device 115 wirelessly over the interface 130 or a dedicated interface. The user interface 135 may be used to control said household appliance 110 and/or to set or edit a filter for the control device 115. Said filter describes what kind of data said user 125 agrees to share with an external storage or service, especially with the central device 105. First data provided by said control device 115 may be associated to a unique identification for the appliance 110 or its type. Said identification may comprise predetermined number or alphanumeric string. As will be described in more detail below, the user interface 135 may also be used to convey external information to the user 125.

Collected first data from said sensors 120 may be subjected to the set filter. The filtered first data may be provided to a first data storage 145 which may be implemented as a remote server or a service, especially in a cloud. A second data storage 150 may be provided for trouble data with household appliances 110. The second data storage 150 may receive corresponding second data e.g. from repairs done by a technician 155, including spare parts 160 required during the repair, time needed and/or additional remarks from a technician 155. It can also be fed from an external knowledge database, a web page or forum containing information about typical problems with said appliance 110 and solutions or materials quality information. Second data may also be associated with a unique identification of the household appliance 110 it relates to. It is preferred that the second data storage 150 uses the same kind of identification as the first data storage 145 so that first and second data may be related to each other via the identification of the household appliance 110.

First and second data may be forwarded to the device 105 where they can be processed. It is preferred that first and second data is structured such that automatic procession, especially in the context of machine learning is possible. For systematic information like said first data, a format may be given. For information derived from human experiences, discussion, estimation or insights, a human-understandable format may be acceptable. In one embodiment said device 105 is adapted to process natural language data and may for instance comprise a language model, especially a large language model (LLM).

The central device 105 may acquire first and second data from said data stores 145, 150 or directly from a household appliance 110 and process it. Processing is preferred to use methods of machine learning and especially of artificial intelligence. In one embodiment, an ANN is used. Said device 105 processes said first and second data in order to find relationships between data points. Processing may comprise training said learning machine to relate said first data to said second data.

In other words, it is attempted to provide a trained machine which is able to accept usage or operation data concerning a household appliance 110 and determine possible trouble data which may relate to it. Said machine 105 is preferred to also be able to determine if input first data has no relationship to any known second data. In this case, a household appliance 110 from which said first data is derived may be considered fully functional and not subject to functional problems.

Based on past training data, said device 105 may also determine a probability that a malfunction will happen in a predetermined future. For prediction, both statistical and AI techniques may be used. Said future is preferred to lie in a predetermined range, say, between 1 and 30 days.

There may be provided a third data storage 165. The device 105 may match information from the first and second data storages 145, 150 and provide a prediction, based on appliance data and repair data, whether a malfunction of said household appliance 110 is to be expected. A confidence score may be provided which indicates a probability with which a predicted malfunction (or its absence) will be correct. Said confidence score may be a function of time into the future. Said third data storage 165 may use the anonymous single key which is able to match first and second data with each other or with a type of household appliance 110.

It is preferred that said device 105 will continually check and improve its prediction capabilities base on a steam of first and second data on operation and malfunction of household appliances 110. This way said device 105 may host a continuously learning process which may continue to improve prediction capabilities. This way, a number of false positive determinations of upcoming malfunction and/or a number of incorrect negative determinations of trouble-free operation may be reduced to a minimum.

A result of such determination may be relayed to said user 125. The result may be indicative of a possibly pending malfunction of the household appliance 110. The user 125 may be suggested to take action to service or replace said household appliance 110. The user 125 may be supplied with more detailed information like how much a service measure will cost him/her or what the chances are that a predicted behavior will prove true. There may also be an indication of what remaining use the household appliance is determined to be. This may be based on slowly deteriorating performance of said household appliance 110 or one of its parts. On the basis of such information, the user 125 may for instance decide to perform some - possibly suggested - service action on the household appliance 110, inform a technician 155, replace a part 160, ignore the prediction or scrap the household appliance 110 altogether. The device 105 may be adapted to provide information that will help the user 125 in this decision process.

It is to be understood that although the device 105 and the first, second and third data storages 145, 150, 165 are shown as separate entities, two or more of them may be integrated into one entity. In one embodiment, all four elements 105, 145, 150, 165 can be realized by one machine, server or service.

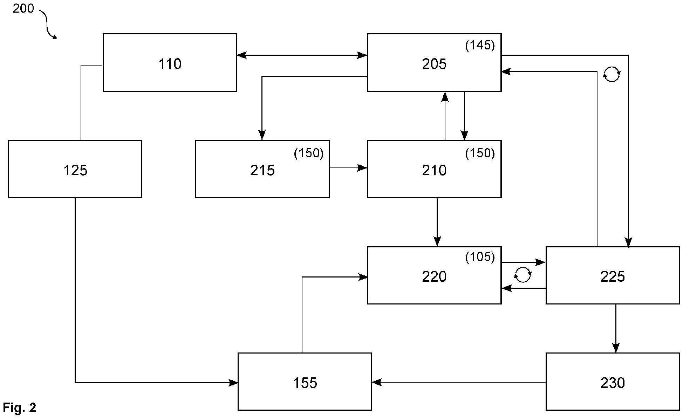

Figure 2 shows shows steps of a method 200 for quality management for household appliances. Steps are shown as boxes, identified by reference signs. Additional reference signs in brackets denote items in system 100 where the corresponding step takes place or where a data flow item is located. That is, appliance data will be generated at the appliance 110 and forwarded to the first data storage 145. Malfunction data 210 and error data 215 may be forwarded to second data storage 150. Data analysis may take place in a step 220 on the central device 105. Data control may be done in a step 225 and communication in a step 230. Besides this, figure 2 also shows the customer or user 125 and the repair service or technician 155. Circular arrows indicate ongoing updates.

In one exemplary walkthrough the following steps may be carried out:
1. The customer home appliance 110 registers the usage of data and forwards this information to the first data storage 145.
2. The first data storage 145 keeps the usage information from the appliance 110 for a predetermined period.
3. The second data storage 145 identifies an error generated by one specific appliance 110 and notifies this unexpected situation to the central device 105.
4. The second data storage 145 calls to the central device 105 and requests data of that appliance 110 before the error happened. Additional information may be drawn for appliances of the same or a similar type which are known to have suffered from a similar error.
5. The central device 105 generates historic information for each error and product. Thanks to this historical information, the device 105 can start to work to predict a future malfunction on the basis of an early indication that is detected in the usage or operation data. This observation may be based on statistical techniques.
6. The more historic information is used by device 105, the more precise predictions may be generated.
7. The central device 105 may apply a machine-learning algorithm to improve the prediction, according to more and more data received on errors.
8. The central device 105 organizes all the data generated in a previous period for all appliances 110 for each specific errors.
9. In a step 220, the central device 105 determines specific relationships between events, which happened in the periods analyzed and the error in question.
10. The central device 105 performs this analysis for each identified error.
11. The central device 105 learns from each generated set of data. It may apply a controlled machine learning technique to improve the prediction of errors.

In an illustrative example where the appliance 110 comprises a coffee maker, the first information received related to an error in step 215 is that a water temperature internal to the appliance 110 drops from a normal 60 °C to only 30°C. Each time a coffee specialty is prepared, the temperature drops by another 2 °C. Once the defect becomes manifest, a maximum of 15 use cycles remain before the temperature is so low that the coffee does not taste well any more.

The central device 105 determines this relationship and identifies a good time when the user 125 should be informed of the upcoming malfunction. In the present example, it could be determined that an alarm should be raised if the temperature falls to 46 °C. With an observation of a temperature drop to this value, a confidence that the suspected error has befallen the appliance 110 may be 99%, while the confidence may be only 60 % if the observed temperature drop is no larger than 60%. The prediction says that the appliance will be rendered unusable after 7 cycles.

The central device 105 manages all the predictions and updates the predictions if more information to this prediction becomes apparent. Depending on a program running (for example, or an additional information from other sensors), the temperature may descend 3°C or 1°C during each cycle.

The cloud control of data 225 may check continuously if the predictions stored are up-to-date according to the data analysis 220 and if the data from the cloud appliance 205 identifies one appliance 110 as being affected by a prediction, checking the predictions one by one continuously. This may be done in parallel with more than one prediction at the same time.

A communication block 230 manages the communication to users 125 of appliances 110 or technicians 155. The communication block 230 manages the time and the frequency to communicate with a user 125. The user 125 may be allowed to adjust or personalize such communication. Once the user receives a warning that his appliance 110 may have only a limited time or number of operation cycles left to go, he or she may decide on how to proceed with the appliance 110.

In some embodiments, the communication block 230 may supply information on fixing options for the appliance 110. This may include usage advice or a simple service intervention that may be carried out by the user. A cost estimate for fixing the appliance 110 may be produced. Optionally, the user 125 may be offered help in finding or hiring a technician 155.

### Reference list (as part of the description)

- 100: system
- 105: device (central)
- 110: household appliance
- 115: control device (at the appliance)
- 120: sensor
- 125: user / person responsible for the household appliance
- 130: communication interface
- 135: user interface
- 140: data network
- 145: first data storage (operation and usage)
- 150: second data storage (malfunction or service)
- 155: technician
- 160: spare part
- 165: third data storage (predicted events)

- 200: method
- 205: appliance data
- 210: malfunction data
- 215: error data
- 220: data analysis
- 225: data control
- 230: communication

## Claims

1. Method (200), comprising the following steps:
- collecting (205) first data indicative of operation or usage of a plurality of household appliances (110) of a predetermined type;
- collecting (210, 215) second data indicative of malfunctions or service requirements of household appliances (110) of said type;
- wherein first or second data of a household appliance (110) is subjected to a filter that is configurable by a user associated to said household appliance (110);
- applying (220) machine learning to relate first data to second data.

2. Method (200) according to claim 1, wherein information indicative of a user is extracted from first and second data.

3. Method (200) according to claim 1 or 2, further comprising a step of predicting an upcoming malfunction or service requirement in a household appliance (110) on the basis of its operation or usage data.

4. Method (200) according to claim 3, wherein remaining usage information until a predicted malfunction is determined.

5. Method (200) according to claim 3 or 4, wherein a user intervention for preventing the predicted malfunction is determined.

6. Method (200) according to one of claims 3 through 5, wherein a service measure for preventing the predicted malfunction is determined.

7. Method (200) according to one of the above claims, further comprising collecting third data indicative of service or repair applied to household appliances (110) of that type; wherein prediction capabilities of the machine learning are verified or refined on the basis of said third data.

8. Method (200) according to one of the above claims, wherein fourth data indicative of retired household appliances (110) of said type is collected; and wherein an expected lifetime of said type of household appliance (110) is determined.

9. Device (105), comprising:
- a first interface for first data indicative of operation or usage of household appliances (110) of a predetermined type;
- a second interface for second data indicative of malfunctions or service requirements of household applications of that type;
- a processing unit that is adapted to apply machine learning to relate first data to second data.

10. Control device (115) for a household appliance (110), the device comprising:
- a sensor (120) for determining operation or usage data of the household appliance (110);
- a communication interface (130);
- a user interface (135);
- a processing unit that is adapted to capture user input relating to a data filter; to collect first data indicative of operation or usage of said household appliance (110); to collect second data indicative of malfunctions or service requirements of said household appliance (110); to subject said data to said filter; and to provide the filtered data to an external unit.

11. Household appliance (110), comprising a control device according to claim 10.

12. System (100), comprising a device according to claim 9 and a plurality of household appliances (110) according to claim 11.

13. System (100) according to claim 12, wherein each household appliance (110) is assigned a unique identification; and the processing unit of a household appliance (110) is adapted to provide said data along with said identification.

## Amended claims

### Amended claims in accordance with Rule 137(2) EPC.

1. Computer-implemented method (200), comprising the following steps:
- collecting (205) first data indicative of operation or usage of a plurality of household appliances (110) of a predetermined type;
- collecting (210, 215) second data indicative of malfunctions or service requirements of household appliances (110) of said type;
- wherein the first or the second data of a household appliance (110) is subjected to a filter that is configurable by a user associated to said household appliance (110);
- applying (220) machine learning to relate the first data to the second data; **characterized in that**
- the filter describes what kind of data the user agrees to share with an external storage or service and
- information indicative of the user is extracted from the first and the second data.

2. Method (200) according to claim 1, further comprising a step of predicting an upcoming malfunction or service requirement in a household appliance (110) on the basis of its operation or usage data.

3. Method (200) according to claim 2, wherein remaining usage information until a predicted malfunction is determined.

4. Method (200) according to claim 2 or 3, wherein a user intervention for preventing the predicted malfunction is determined.

5. Method (200) according to one of claims 2 through 4, wherein a service measure for preventing the predicted malfunction is determined.

6. Method (200) according to one of the above claims, further comprising collecting third data indicative of service or repair applied to household appliances (110) of that type; wherein prediction capabilities of the machine learning are verified or refined on the basis of said third data.

7. Method (200) according to one of the above claims, wherein fourth data indicative of retired household appliances (110) of said type is collected; and wherein an expected lifetime of said type of household appliance (110) is determined.

8. Device (105), comprising:
- a first interface for first data indicative of operation or usage of household appliances (110) of a predetermined type;
- a second interface for second data indicative of malfunctions or service requirements of household applications of that type;
- a processing unit that is adapted to extract information indicative of the user from the first and the second data and apply machine learning to relate the first data to the second data.

9. Control device (115) for a household appliance (110), the device comprising:
- a sensor (120) for determining operation or usage data of the household appliance (110);
- a communication interface (130);
- a user interface (135);
- a processing unit that is adapted to capture user input relating to a data filter; to collect first data indicative of operation or usage of said household appliance (110); to collect second data indicative of malfunctions or service requirements of said household appliance (110); to subject said data to said filter, wherein the filter describes what kind of data the user agrees to share with an external storage or service and wherein information indicative of the user is extracted from the first and the second data; and to provide the filtered data to an external unit.

10. Household appliance (110), comprising a control device according to claim 9.

11. System (100), comprising a device according to claim 8 and a plurality of household appliances (110) according to claim 10.

12. System (100) according to claim 11, wherein each household appliance (110) is assigned a unique identification; and the processing unit of a household appliance (110) is adapted to provide said data along with said identification.
